# EUROPEAN PATENT SPECIFICATION

(11) **EP 3 708 545 B1**
(45) Date of publication and mention of the grant of the patent: **05.06.2024**
(21) Application number: 19461517.5
(22) Date of filing: 11.03.2019
(51) Int. Cl.: C03B 1/02, C03C 1/02, C03C 3/097

(54) **METHOD FOR GRANULATING GLASS BATCH COMPONENTS**
VERFAHREN ZUM GRANULIEREN VON GLASGEMENGEBESTANDTEILEN
PROCÉDÉ DE GRANULATION DE COMPOSANTS D'UN LOT DE VERRE

(43) Date of publication of application: 16.09.2020
(73) Proprietor: Klisch spolka z ograniczona odpowiedzialnoscia, 38-400 Krosno (PL)
(72) Inventor: KLISCH, Marian, 38-400 Krosno (PL)
(74) Representative: AOMB Polska Sp. z.o.o.

(56) References cited:
- EP-A1- 3 127 876
- US-A- 5 393 714

## Description

### Field of the Invention

The object of the invention is a method for granulating a glass batch using a silicate-phosphate binder.

### Prior Art

All known processes for granulating glass batch components involve the use of either a disc granulator (US 3206528, US 3914364, US 4031175, US 4026691, US 4235618, US 4243423) or a drum granulator (US 3767751, US 4028131, EP 2944618 A1, EP 3095765 A1). In addition to failure in adjustment of the efficiency of mixers and granulators, a further drawback of the latter is their large size preventing from installing them in existing batch preparation lines without significantly rearrangement thereof. Particularly large equipment is needed for container and float glass factories where hundreds of tons of batch are produced per day. A disadvantage of a disc granulator, as means for granulating glass batch components, is also the fact that the process parameters have to be adjusted almost continuously and the water concentration in the granules is not constant, thus complicating drying and heating processes thereof. In case of a drum granulator, the problems are following: a broad size distribution of granules with a significant share of dust (< 0.063 mm) and too large granules (> 15 mm). A significant drawback of the binders used so far, prepared basing on water glass or soda lye, is the low mechanical strength of the granules once they are formed, this generating the need for seasoning prior to transport.

In the state of art, merely the information can be found on possibility of obtaining only microgranules (of size up to 1 mm) directly in the mixer. This possibility is provided by devices for intensive mixing at the speed of about 10 m/s.

However, in case of granules with an average size below 1 mm, it is difficult to maintain a homogeneous distribution of all batch components in a single granule, especially when at least a few coarse raw materials are used for the preparation thereof. In standard glass batches the largest grains of sand, feldspar, granulated blast-furnace slag, dolomite, limestone and heavy ash, have such sizes (0.5 - 1.0 mm) that they can become a single dominant component in a given granule of a size below 1 mm. On the other hand, the use of fine sand, feldspar, granulated blast-furnace slag, dolomite or other raw materials will always incur additional costs resulting from the necessity of grinding and grain size-sorting thereof.

It is known to use phosphate-containing binders for granulation of mixtures for obtaining ceramics and chemical fertilizers, which, however, contain completely different components from these of glass batches. Mixtures of alkaline silicates and phosphates are also used for fast-setting cement preparation.

US 2077258 describes binders for ceramics masses used for producing alkaline refractory materials containing water-soluble alkali silicates, preferably sodium silicate and an equivalent amount of alkali phosphates, preferably trisodium phosphate.

US 3266886 describes a granulation process of potassium phosphate fertilizers (without nitrates), wherein spraying with an alkali silicate solution in the amount of 1 to 4% by weight based on the total weight of dry components is performed, followed by spraying with orthophosphoric acid in the amount corresponding to 200 - 400% by weight of alkali silicates. The mixture was then dried to a moisture content of 0.5 to 5% H₂O by weight and agglomerated.

US 3804651 describes a method for preparing fast-setting cements. These were prepared by a reaction of wollastonite (natural CaSiO₃) with phosphoric acid buffered with a mixture of zinc phosphate Zn₃(PO₄)₂, aluminium phosphate AlPO₄ and magnesium phosphate Mg₃(PO₄)₂·5H₂O obtained by dissolving metallic zinc, aluminium and magnesium in phosphoric acid.

US 6518212 describes a method for producing chemically bonded phospho-silicate ceramics based on the reaction of powdered NaH₂PO₄, LiH₂PO₄, KH₂PO₄, (NH₄)H₂PO₄, (NH₄)₂HPO₄ with oxides from the group of MgO, BaO, ZnO and CaO, and silicates from the group of: CaSiO₃, MgSiO₃, BaSiO₃, Na₂SiO₃, Li₂SiO₃, Mg₆Si₄O₁₀(OH)₈.

US5393714 A teaches glass batch granulation using sodium aluminate binders in combination with phosphates.

EP3127876 A1 discloses silicates and phosphates as binders, that can be used in combination for preparing a color glass frit.

### Summary of the Invention

The aim of the present invention was to provide a method for granulating a glass batch without the disadvantages of earlier solutions described above, including, in particular, providing the granulation that is carried out in a typical mixer used for homogenisation without the need for additional granulation, sieving, grinding or agglomeration steps, in a short period of time and allowing for a substantially uniform granule size distribution (limiting dust and too large granules).

The object of the invention is a method for granulating a glass batch as defined in claim 1.

Preferably the second binder is acidified with phosphoric (V) acid.

In a preferred embodiment of the method according to the invention, the binder is formed by adding separate streams of the first and the second binder precursor to a mixer containing glass batch components, the streams being added simultaneously or sequentially, in any order. In one particular embodiment the first binder precursor being water glass is added first, followed by the second binder precursor in form of aqueous solution of Ca(H₂PO₄)₂ or a mixture of Ca(H₂PO₄)₂ and Mg(H₂PO₄)₂, acidified with phosphoric (V) acid, while in another particular embodiment the second binder precursor in form of aqueous solution of Ca(H₂PO₄)₂ or a mixture of Ca(H₂PO₄)₂ and Mg(H₂PO₄)₂, acidified with phosphoric (V) acid, is added first, followed by the first binder precursor being water glass.

In another preferred embodiment of the method according the invention, a stream of the first binder precursor being water glass, is added first to a mixer containing glass batch components, including limestone dust and/or dolomite dust, followed by phosphoric (V) acid, which reacts *in situ* with limestone dust and/or dolomite dust to produce the second binder precursor, which contacted with water glass gives the binder. In an alternative preferred embodiment phosphoric (V) acid is first added to a mixer containing glass batch components, including limestone dust and/or dolomite dust, said acid reacting *in situ* with limestone dust and/or dolomite dust to produce the second binder precursor, followed by a stream of the first binder precursor being water glass, which contacted with the second binder precursor gives the binder.

Water glass containing hydrated sodium silicates or hydrated potassium silicates, or a mixture of hydrated sodium and potassium silicates is used as the first binder precursor. In another preferred embodiment, the water glass further comprises NaOH and/or KOH, and/or amorphous silica. In yet another preferred embodiment, the water glass further comprises Na₂CO₃ and/or K₂CO₃.

Preferably, the water glass used as the first binder precursor has a SiO₂/R₂O module of 1.5 to 4.1, wherein R = Na or K. In the most preferred embodiment, the water glass being used has a SiO₂/R₂O module of 3.3 to 4.1, wherein R = Na or K.

Preferably, Ca(H₂PO₄)₂ is used as the second binder precursor, which is obtained by dissolving CaCO₃ in form of limestone dust or chalk and/or CaO in form of burnt lime, and/or Ca(OH)₂ in form of slaked lime, in phosphoric (V) acid used in the amount not smaller than the one corresponding to a Ca/P molar ratio of 0.5.

In another preferred embodiment, a mixture of Ca(H₂PO₄)₂ and Mg(H₂PO₄)₂ is used as the second binder precursor, which is obtained by dissolving CaMg(CO₃)₂ in form of dolomite or a mixture of CaCO₃ in form of limestone dust or chalk and/or CaO in form of burnt lime, and/or Ca(OH)₂ in form of slaked lime, and/or MgCO₃, and/or MgO, and/or Mg(OH)₂, in phosphoric (V) acid used in the amount not smaller than the one corresponding to a (Ca+Mg)/P molar ratio of 0.5.

Preferably, a component of the batch is fine glass cullet with grain size lower than 2 mm, preferably lower than 1 mm, in the amount of 0.1 to 98% by weight of the total batch weight.

The main advantage of the method is the possibility to carry out the granulation process in a mixer customarily used for mixing the batch over a period of only 2-6 minutes longer than the duration of a standard batch homogenisation process. In this way, both the process and the preparation line for granulated batch are significantly simplified, as there is no need to use a disc or drum granulator, which is particularly important in the mass production of glass, such as container and float glass. Using the method according to the invention, the size distribution of granules can be controlled in the range of about 1 mm to about 10 mm, allowing to obtain their characteristics according to the specific requirements for a particular type of glass and/or glass manufacturer.

Granules larger than 1 mm provide better composition uniformity, even when using coarse species of raw materials: sand, feldspar or granulated blast-furnace slag. Granulating the batch components by the method of the invention also allows to use fine cullet (with grain size lower than 2, preferably lower than 1 mm) as one of the batch components introduced into a mixer, said fine cullet being a burdensome waste resulting from the treatment process thereof, difficult to reuse in the glass melting. The possibility of adding fine cullet to a mixer together with the batch and subjecting the mixture to granulation allows to eliminate the source of problems associated with undesirable course of the melting process of loose batches containing wet, fine cullet. First, in case of granules, the release of CO₂ from the thermal decomposition of dolomite and/or limestone is facilitated and starts at temperatures 50 - 100°C lower than in case of loose batches, thereby reducing the risk of foam formation on the glass surface in the region of feeding the batch to the furnace. In addition, in the initial melting step each granule is a quasi-isolated system, wherein the grains of batch components, due to the binder interact in a preferred manner with the nearest neighbours, thereby providing better homogeneity of the resulting melt. Cullet grains arranged inside the granules form local sources of high viscosity liquid phase, which also accelerates melting by interacting with the nearest grains of the other batch components.

Owing to the unique properties of the new binder used in the granulation method according to the invention, it is possible to convert a loose mixture of raw materials containing: sand, soda, limestone, dolomite, feldspar, sodium or calcium sulphate and other chemical or mineral raw materials used as components of the batch, into mechanically durable granules during one continuous process ended in the mixer without the necessity of additional treatment on disc or drum granulators.

The advantage of this method results from the properties of the new binders proposed, in particular their very short gelation time (about 15 seconds) and then hardening as a result of the reaction of binder components with CaCO₃ and/or CaMg(CO₃)₂ being the batch components. The proposed binders are formed *in situ* in a mixer by addition to all batch components, either sequential or simultaneous, but in separate streams, preferably by spraying, of water glass or sodium aluminate as the first binder precursor, and aqueous solution of calcium and/or magnesium dihydrogen phosphate containing some excessive phosphoric acid (as an additive stabilising these forms of calcium and/or magnesium phosphates in a solution) as the second binder precursor.

Due to short gelation time of water glass after the addition of phosphoric acid or, more preferably, of a solution of calcium and/or magnesium dihydrogen phosphate, being about 15 seconds, similar granulation results are obtained regardless of the order of feeding the binder precursors to the mixed batch, and regardless of whether precursors are fed sequentially or simultaneously, but in separate streams.

### Detailed Description of Preferred Embodiments of the Invention

In the most preferred case, wherein water glass is fed first and a calcium dihydrogen phosphate solution second, the water glass initially forms thin layers of viscous liquid around all grains of raw materials. Upon the addition of a calcium dihydrogen phosphate solution or a mixture of calcium dihydrogen phosphate solution and magnesium dihydrogen phosphate, the gelation of these layers is almost immediate (up to 15 seconds), and thus the process of batch grains agglomeration can begin. At the same time, partial dissolution of calcium and/or dolomite grains also occurs in the excess of phosphoric acid introduced with a dihydrogen phosphate solution, leading to an increase in the Ca/P or (Ca + Mg)/P ratio in phosphates, resulting in their conversion into calcium hydrogen phosphate or a mixture of calcium and magnesium hydrogen phosphate with significantly lower solubility in water than their dihydrogen phosphate equivalents. This transformation of water-soluble calcium and/or magnesium dihydrogen phosphates into very poorly soluble calcium and/or magnesium hydrogen phosphates results in hardening of the binder layers between grains of raw materials of the glass batch and the formation of mechanically strong granules. The desired rapid hardening is favoured by the binding of water from the binder into calcium and magnesium hydrogen phosphate hydrates, CaHPO₄·2H₂O and MgHPO₄·3H₂O, respectively. The hardening process is also facilitated by formation of hydrated calcium silicates (the so-called CSH phase) and, once the temperature of granules decreases below 35.5°C, by formation of Na₂CO₃·7H₂O hydrates. The mixing, agglomeration and granulation process may, due to these reactions, be completed in the total time being as short as 8-12 minutes, and the obtained granules may be transported to the drying and/or preheating installation without the need for seasoning, i.e. in a single continuous process.

The granulation process in a mixer using the phosphate-containing binder can be effectively performed at low concentrations of both components thereof: water glass in the amount corresponding to 1 to 3% by weight of the total mass of dry batch and phosphates in the amount equivalent to 0.1 to 1.5% by weight of P₂O₅ in glass obtained from this batch. Higher water glass concentrations (even up to 20%) may also be used, but this is not necessary, since even when using such small amounts of water glass as 1.8 - 3.0%, all grains of raw materials from the batch can be processed into granules.

Calcium dihydrogen phosphate and/or magnesium dihydrogen phosphate may be used in form of commercially available products, but the cheapest and simplest method for obtaining them is to dissolve the appropriate amount of limestone (CaCO₃), burnt lime (CaO), slaked lime (Ca(OH)₂) or dolomite (CaMg(CO₃)₂) in phosphoric acid diluted with water in the amount allowing to obtain the desired concentrations of Ca(H₂PO₄)₂ and/or Mg(H₂PO₄)₂. To obtain calcium dihydrogen phosphate in the simplest and most preferred way, a portion of limestone dust used as a batch component is to be used. Similarly, to obtain a mixture of calcium and magnesium dihydrogen phosphate in the simplest and most preferred way, a portion of dolomite dust used as a batch component is to be used.

The aqueous solution of calcium dihydrogen phosphate with pH of 2 to 3 is the most preferred precursor of silicate-phosphate binder due to an easy and rapid reaction of CaCO₃ with diluted phosphoric acid and to water solubility thereof being sufficient for the binder's requirements in glass batch granulation. When using slow mixing, the reaction of limestone dust with diluted orthophosphoric acid, accompanied by intense release of CO₂, ends after about 20 minutes. When the Ca/P ratio in the solution is maintained at a level below 0.5, that is below the stoichiometric Ca/P value in dihydrogen phosphate, solutions containing up to 10 - 12% Ca(H₂PO₄)₂ may be obtained. The pH of these solutions ranges from 2 to 3. Solutions with such pH can be stored for months without concerns as to the change in properties or composition, which is important from the point of view of their transport and dosage into the mixer. A small amount of sediment resulting from the contamination of silica, silicates and/or aluminosilicates in limestone dust is not a problem either during transport or during spraying the calcium dihydrogen phosphate solution. When using the method according to the invention there is no need to prepare fresh portions of water glass and calcium dihydrogen phosphate acidified with the excess of phosphoric acid for every subsequent portion of the batch, as both components can be dosed by volume from large tanks.

Since CaO is a common component of all soda-lime-silicate container glasses, float glasses, other flat glass types e.g. for LED devices, tableware and lighting glasses, calcium dihydrogen phosphate is the most preferred phosphate binder precursor for granulating glass batches in a mixer according to the method of the invention.

For phosphate shares in the binder corresponding to P₂O₅ concentration limit in industrial soda-lime-silicate glass (1.5% by weight), the amount of CaO introduced to the batch with calcium dihydrogen phosphate corresponds to 0.59% by weight of CaO in the glass. In case of the most preferred calcium dihydrogen phosphate shares in the binder (corresponding to P₂O₅ concentration of 0.2 to 0.5% by weight in glass), CaO introduced to the batch with calcium dihydrogen phosphate corresponds to 0.08 to 0.20% by weight of CaO in the glass. Such CaO quantities may substitute MgO in glass with no significant consequences for melting and properties thereof. Therefore, calcium dihydrogen phosphate prepared by dissolution of limestone dust in a diluted phosphoric acid is also a preferred option for dolomite batches containing no limestone dust. In case of glasses, in which the change of 0.08 - 0.20% MgO by weight into CaO is a problem, dolomite can be used as a precursor of a calcium and magnesium dihydrogen phosphate mixture, or MgO, or Mg(OH)₂, or MgCO₃ can be used as precursors of magnesium dihydrogen phosphate obtained by their reaction with phosphoric acid.

Ca/P or (Ca + Mg)/P molar ratio in the solution must be maintained within the range of 0.05 - 0.5 (0.5 is a stoichiometric value of the Ca/P and Mg/P ratio in calcium and magnesium dihydrogen phosphates), but values within the range of 0.2 - 0.4 are the most preferred.

Due to the role played by hydrated calcium silicates and calcium and/or magnesium hydrogen phosphate hydrates in the process of glass batch component grain agglomeration, use of alkali phosphates, for example of sodium and/or potassium, as a phosphate binder precursor is less preferred, although, also in this embodiment of the method, the glass batch components containing limestone and/or dolomite can be effectively processed into a granulated form. All available inorganic phosphates soluble in water can be actually used to obtain a phosphate binder precursor, i.e. in addition to sodium and potassium phosphates, also e.g. zinc phosphates. However, the selection of phosphates other than calcium dihydrogen phosphate and/or magnesium dihydrogen phosphate extends the reaction path to obtain desired binder components: hydrated calcium and/or magnesium silicates and calcium and magnesium hydrogen phosphates. Further, it is difficult to control the course of these reactions during the granulation process in a mixer.

The total amount of phosphates introduced with the binder to the batch is maintained at a level corresponding to P₂O₅ concentration in glass below the solubility limit thereof. In soda-lime-silicate container glasses, float glasses, tableware glasses, lighting glasses, this limit is determined by P₂O₅ concentration of 1.5% by weight.

Due to relatively high price of phosphoric acid, its concentration in the binder should be minimised also for this reason. The experimental work performed shows that the shares of calcium dihydrogen phosphate and/or a mixture of calcium and magnesium dihydrogen phosphates in the binder corresponding to P₂O₅ concentration of 0.2 - 0.5% by weight in glass are sufficient to perform effective granulation of the batch in a mixer.

Such phosphorus concentration has no adverse effect either on the course of melting of the glass, or the properties thereof. Moreover, a significant decrease of the liquidus temperature was found following the introduction of 1% by weight of P₂O₅ into industrial container glasses, which has to be considered a significant benefit associated with the presence of this element in the binder and the glass.

Water glass used in the binder may be a solution prepared from glassy sodium silicates, glassy potassium silicates or mixtures thereof with all obtainable modules. Therefore, all commercially available water glasses having SiO₂/Na₂O and SiO₂/K₂O modules from 1.5 to 4.1 are suitable for this application. Furthermore, water glasses having lower modules, prepared by alkalising commercially available water glasses with NaOH and/or KOH, as well as water glasses having higher modules prepared by the addition of amorphous silica, for example, in form of silica gel, are suitable for these applications. However, since one of the desired compounds, that may be formed on the surface of batch grains as a result of the reaction between water glass and calcium dihydrogen phosphate, is hydrated calcium silicate, in order to obtain short gelation times of the binder and a fast increase in mechanical strength of granules, water glasses having the highest SiO₂/Na₂O and SiO₂/K₂O modules are more preferred.

For faster formation of granules with a more homogeneous grain distribution, it is more preferred to use light rather than heavy soda ash as a batch component. Also fine limestone varieties, such as, for example, chalk, and/or fine dolomite varieties, are more preferred than their coarse equivalents. Since light soda ash is cheaper than the heavy one and the price of chalk is similar to coarse varieties of limestone dust, this replacement leads to a reduction in the total cost of the batch, which is an important additional advantage of the proposed granulation method.

If other raw materials used in the batch are coarse, then, for a more efficient course of the grains agglomeration process and further, the granulation process in the mixer, it is advantageous to add a part of soda and/or potash to the water glass (in a ratio from 1:20 to 1:3). The second batch component, i.e. a solution of calcium dihydrogen phosphate or of a mixture of calcium and magnesium dihydrogen phosphate, is prepared and dosed to the mixer in the same way as while using unmodified water glass as the second binder component.

Since soda tends to form hydrates which significantly reduce the amount of water available for the proper course of agglomeration and subsequent granulation processes, it is preferred to maintain the batch temperature above 35.5°C (i.e. above the upper temperature of Na₂CO₃·7H₂O formation) before introducing aqueous solutions containing batch components. Due to the heat losses during heating of a mixer pan and mixing tool, when their initial temperature is below 35.5°C, it is advantageous to heat the mixer and/or the batch to the temperature within a range of 40 - 45°C prior to the first mixing cycle. In case of a continuous production of granulated batch, this is a one-time operation, since the amount of the heat released during mixing/agglomerating/granulating is sufficient to maintain the input temperature above the limit of 35.5°C. By using this procedure, distribution of the first binder precursor, preferably water glass, on all the grains of the batch, starts from the first moments of mixing. Of course, the initial heating of the mixer and/or the batch is not necessary if the ambient temperature is high (above 25°C). The required input temperature, above 35.5°C, can also be achieved by an extended mixing cycle, although this method is not the best way for energy generation and therefore it is not recommended.

The preferred devices for glass batch granulation are so called intensive-mixing mixers with an inclined pan and an eccentrically placed mixing tool, although other mixers providing the mixing speed of at least 10 m/s and enabling the agglomerates of raw materials' grains to roll on the internal walls of the device are also suitable for using this technology.

In the initial period lasting from 15 to 30 seconds, rough mixing of grains of the batch raw materials is carried out. During this stage, as well as during the dosage of the first batch component, typically water glass, the rotation of both the pan and the mixing tool should be slow (about 10 revolutions per minute and 0.5 m/s, respectively) in order to avoid, or at least reduce, the carryover of light soda ash and fine fractions of limestone dust and/or dolomite. Immediately after the complete moistening of the batch grains with water glass is reached, which requires 30 to 60 seconds of mixing, the speed of the mixing tool should be increased to 10 - 25 m/s. At the same time, the pan rotation speed should be increased to 25 - 80 revolutions per minute. Pouring or spraying of the second binder component, typically calcium dihydrogen phosphate or a mixture of calcium and magnesium dihydrogen phosphates, should take place during such fast rotation of the pan and the mixing tool.

The best distribution of water glass and calcium dihydrogen phosphate or a mixture of calcium and magnesium dihydrogen phosphates is achieved when spraying of both liquids is performed using compressed air, most preferably with LVLP (Low Volume Low Pressure) spray guns. Use of compressed air with the pressure of up to 2 bars is a good compromise, providing the rapid and homogeneous distribution of the binder and, at the same time, limiting the losses of fine fractions of the raw materials from the mixed bed.

After 240 - 600 seconds of high-speed mixing, grain agglomeration is terminated and microgranules of a uniform size within the range of 1-2 mm are formed. Thereafter, upon reducing the mixing tool speed to 2 - 8 m/s, a granulation step lasting from 60 to 360 seconds begins. The average size of the resulting granules depends on the applied combination of speed and mixing time settings. The slower the revolutions of the mixing tool and the longer the granulation time, the larger granules are formed. The most desired granule size distribution from 2 to 6 mm is achieved, when the mixing tool speed is about 5 m/s and the granulation time is from 120 to 300 seconds.

Binder precursors may be fed in the sequence as described above or in the reverse sequence, i.e. first the solution of calcium dihydrogen phosphate or calcium and magnesium dihydrogen phosphate and then the water glass. Since the solutions of calcium dihydrogen phosphate and magnesium dihydrogen phosphate have low viscosity, they moisten very well the grains of the raw materials forming the batch. Upon water glass spraying, these phosphates react with it by forming gel inter-grain bridges which set up as a result of their further saturation with calcium and/or magnesium derived from the partial dissolution of limestone and/or dolomite in the excess of phosphoric acid in the solution of dihydrogen phosphate binder precursor.

Mechanical strength and thermal durability of green granules obtained according to the method described are high sufficiently to transport them to the drying and flue gas preheating installation directly upon unloading the mixer.

Granule size can be adjusted within the range of 1 to 10 mm by selecting the mixing tool speed and the granulation step time.

The binder prepared according to the method of the present invention is designed for granulating the batches for, but without limitation thereto, soda-lime-silicate container glasses, float glasses, flat glasses, tableware glasses, lighting glasses.

After being transformed into a granulated form as a result of the application of the method described in this invention, the batch is suitable for preheating by means of flue gases leaving the furnace which allows to save even up to 25% of the energy required to melt the glass.

The batch granulated according to the invention may also be used in furnaces not equipped with an additional energy recovery installation. When the granulated batch is introduced into the furnace in a form not heated but only dried to the moisture content of about 2% by weight of H₂O, then the energy savings can reach 10% compared to the energy required to transform into glass the same raw material batch, but in loose form.

The concept of granulating the glass batch in a mixer may also be achieved in cases where one of the binder precursors is not water glass but sodium aluminate. Also, in this embodiment of the method, solutions of sodium aluminate and calcium dihydrogen phosphate or calcium and magnesium dihydrogen phosphate may be fed sequentially, in any order, or simultaneously, but in separate streams. In a more preferred case, the aluminate solution is used in the first step and the solution of calcium dihydrogen phosphate or of calcium and magnesium dihydrogen phosphate in the second step. This procedure also allows for the transformation of the loose raw material batch into a granulated form, but due to the inferior properties of such binder, i.e. longer gelation time, the mechanical strength of green granules at the moment the mixer is unloaded is lower than in cases where the water glass is used.

In both embodiments, irrespectively of the fact whether water glass or sodium aluminate is used, instead of solutions of calcium dihydrogen phosphate or of calcium and magnesium dihydrogen phosphate, water-diluted orthophosphoric acid may be used. In this case, calcium phosphates, namely calcium dihydrogen phosphate and hydrogen phosphate or calcium and magnesium phosphates, are produced in the mixer due to reaction between acid and limestone and/or dolomite. This option, however, has two major disadvantages: the necessity to take greater precautions when handling the acid and worse control over the course of reaction between phosphoric acid and glass batch components.

When binder precursors are introduced into the mixer simultaneously, but in separate streams, it is most preferred to use manual, or more preferably, forced compressed air-assisted spraying to distribute them on the batch components. Of course, it is necessary to use separate nozzles here, since the rapid gelation of water glass upon the mixing with calcium dihydrogen phosphate or calcium and magnesium dihydrogen phosphate may result in plugging thereof. This method variant allows for further reduction in the total granulation time, but in result it gives granules with a significantly lower average size (1-2 mm).

The granulation method according to the invention is also effective when one of the batch components is a fine fraction of the cullet having grain size below 2 mm, most preferably below 1 mm. In this way, all cullet generated during its processing, both own and external cullet, can be used for glass melting. In case of loose batches, such cullet generates problems with foaming in the region of feeding the batch to the furnace. Once cullet grains are processed into granules, these problems disappear. First, in case of granules, the release of CO₂ from the thermal decomposition of dolomite and/or limestone is facilitated and starts at temperatures 50 - 100°C lower, thereby reducing the risk of foaming on the surface in the region of feeding the batch to the furnace. Furthermore, each granule, at the initial melting step, is a quasi-isolated system, wherein the grains of batch components, owing the binder interact in a preferred manner with the nearest neighbours, thereby providing better homogeneity of the resulting melt. Cullet grains arranged inside granules are local sources of high viscosity liquid phase which also accelerates melting by interacting with the nearest grains of other batch components.

### Examples

Use of the method for granulating glass batch components using binders containing phosphates has been illustrated by several embodiments presented below.

### Example 1: Granulated batch for flint float glass

A batch for float glass of the following chemical composition (in % by weight): SiO₂ - 71.33, Al₂O₃ - 0.52, Na₂O - 14.2, CaO - 9.06, MgO - 4.03, Fe₂O₃ - 0.02, TiO₂ - 0.03, P₂O₅ - 0.26, SO₃ (available) - 0.56 comprises: sand (0.1 - 0.5 mm) - 1551.06 g, feldspar (0.1 -0.5 mm) - 44.52 g, soda ash (light) - 508.22 g, limestone dust (0.1 - 2.0 mm) - 136.46 g, dolomite (0.1 - 2 mm) - 412.69 g, sodium sulphate - 22.01 g. All raw materials at 21°C were poured into an intensive-mixing mixer with an inclined pan and a Z-shaped mixing turbine. Pre-mixing of the dry batch for 30 seconds was carried out at 10 revolutions of the pan per minute and the turbine speed - 0.5 m/s. Subsequently, without changing the turbine and pan rotation, 69.54 g of water glass having SiO₂/Na₂O module = 3.3 and concentration of SiO₂ - 27.43% by weight and of Na₂O - 8,57% by weight diluted with 186.08 g of water were added to the batch by manual spraying. After 60 seconds of mixing, the turbine speed was increased to 5.8 m/s and of the pan to 50 revolutions per minute, and the solution of Ca(H₂PO₄)₂ prepared by dissolving 2.58 g of limestone dust in 9.41 g of orthophosphoric acid (85% by weight) diluted with 60 g of water was manually sprayed. After adding the second binder component, the grain agglomeration process was carried out for 240 seconds followed by granulation for 540 seconds at 11.6 m/s turbine speed and 50 pan revolutions per minute. The final temperature of the granulated batch was 41.3°C. The resulting granule size distribution was as follows (in % by weight): 5.15 - fraction below 1 mm, 32.76 - fraction of 1 - 2 mm, 47.72 - fraction of 2 - 4 mm, and 14.38 - fraction of 4 - 8 mm. The Ca/P ratio in the binder was 0.31, the share of water glass - 2.6% by weight based on the weight of the total dry batch. Water share - 10% by weight based on the weight of the total wet batch.

### Example 2: Granulated batch for flint container glass

A batch for container glass of the following chemical composition (in % by weight): SiO₂ - 71, Al₂O₃ - 1.98, Na₂O - 13.94, CaO - 9.67, MgO - 2.07, Fe₂O₃ - 0.03, TiO₂ - 0.08, MnO - 0.03, P₂O₅ - 0.25, SO₃ (available) - 0.32 comprised: sand (0.1 - 0.5 mm) - 1480.82 g, feldspar (0.1 - 0.5 mm) - 181.87 g, soda ash (light) - 498.14 g, chalk (< 0.05 mm) - 230.73 g, dolomite (0.1 - 2.0 mm) - 183.68 g, granulated blast-furnace slag (coarse calumite) - 90.55 g, sodium sulphate - 10.13 g. All raw materials at 18°C were poured into an intensive-mixing mixer with an inclined pan and a Z-shaped mixing turbine. Pre-mixing of the dry batch for 20 seconds was carried out at 8 revolutions of the pan per minute and the turbine speed - 0.5 m/s. Subsequently, without changing the turbine and pan rotation, 66.91 g of water glass having SiO₂/Na₂O module = 2.5 containing 26.9% by weight of SiO₂ and 11.1% by weight of Na₂O, diluted with 167.85 g of water were added to the batch by manual spraying. After 40 seconds of mixing, the turbine speed was increased to 11.6 m/s and the speed of the pan to 50 revolutions per minute, and the solution of Ca(H₂PO₄)₂ prepared by dissolving 2.48 g of limestone dust in 9.33 g of orthophosphoric acid (85% by weight) and 80 g of water were added by manual spraying. After adding the second binder component, the grain agglomeration process was carried out for 480 seconds followed by granulation for 180 seconds at turbine and pan speeds increased, respectively, to: 10 m/s and 50 revolutions per minute. The final temperature of the granulated batch was 44.5°C. The obtained granule size distribution was as follows (in % by weight): 13.41 - fraction below 1 mm, 26.88 - fraction of 1 - 2 mm, 35.53 - fraction of 2 - 4 mm, and 24.17 - fraction of 4 - 8 mm. The Ca/P ratio in the binder was 0.30, the share of water glass - 2.5% based on the weight of the total dry batch. Water share - 10% by weight based on the weight of the total wet batch.

### Example 3: Granulated batch for flint tableware glass

A batch for tableware glass of the following chemical composition (in % by weight): SiO₂ - 72.14, Al₂O₃ - 1.28, Na₂O - 13.96, K₂O - 0.01, CaO - 9.43, MgO - 2.5, Fe₂O₃ - 0.02, TiO₂ - 0.02, P₂O₅ - 0.35, SO₃ (available) - 0.29 comprised: sand (0.1 - 0.5 mm) - 1543.87 g, feldspar (0.05 - 0.5 mm) - 135.41 g, soda ash (light) - 502.72g, limestone dust (0.5 - 2.0 mm) - 242.67 g, dolomite (0.1 - 2.0 mm) - 263.48g, sodium sulphate - 11.57 g. All raw materials were pre-heated to 45°C and poured into an intensive-mixing mixer with an inclined pan and a star-type turbine. Pre-mixing was carried out within 15 seconds at pan and turbine speeds, respectively, of 25 revolutions per minute and 0.5 m/s. Subsequently, to the dry mixed batch, while maintaining the pan and turbine speeds, 67.55 g of water glass having SiO₂/Na₂O module = 3.3 containing 27.43% by weight of SiO₂ and 8.57% by weight of Na₂O diluted with 143.44 g of water were added by compressed air-assisted spraying with the pressure of 2 bars. After 15 seconds, the speed of the turbine was raised to 10.4 m/s and of the pan to 50 revolutions per minute, and a solution of Ca(H₂PO₄)₂ prepared by dissolving 4.35 g of limestone dust in 12.96 g of orthophosphoric acid (85% by weight) in 70 g of water was added by compressed air-assisted spraying with the pressure of 2 bars. The batch grain agglomeration was carried out for 435 seconds, while maintaining the speed of both the turbine and the pan, and then, after the reduction of the turbine speed to 5 m/s, the batch was granulated for 240 seconds. The batch temperature at the end of the granulation process was 41.0°C. The resulting granule size distribution was as follows (in % by weight): 1.83 - fraction below 1 mm, 9.49 - fraction of 1- 2 mm, 23.75 - fraction of 2 - 4 mm, 42.97 - fraction of 4 - 8 mm, 18.41 - fraction of 8 - 12 mm, and 0.25 - fraction above 12 mm. The Ca/P ratio in the binder was 0.38, the share of water glass - 2.5% based on the total weight of the dry batch. Water share was 9% by weight based on the total weight of the wet batch.

### Example 4: Granulated batch for flint tableware glass

A batch for tableware glass of the following chemical composition (in % by weight): SiO₂ - 72.15, Al₂O₃ - 1.27, Na₂O - 13.99, K₂O - 0.1, CaO - 9.40, MgO - 2.50, Fe₂O₃ - 0.02, TiO₂ - 0.02, P₂O₅ - 0.35, SO₃ (available) - 0.29 comprised: sand (0.1 - 0.5 mm) - 1607.03 g, feldspar (0.1 - 0.5 mm) - 72.46 g, soda ash (light) - 503.83g, chalk (< 0.05 mm) - 243.13 g, dolomite (0.1 - 2.0 mm) - 262.96g, sodium sulphate - 11.56 g. A mixture of all raw materials was pre-heated to 40°C and poured into an intensive-mixing mixer with an inclined pan and a star-type turbine. Pre-mixing of the dry batch was carried out for 15 seconds at pan and turbine speeds, respectively, of: 25 revolutions per minute and 0.5 m/s. Once the dry batch pre-mixing is completed, while maintaining the pan and turbine speeds, 67.13 g of sodium aluminate containing 18.0% by weight of Al₂O₂ and 18.6% by weight of Na₂O diluted with 143.44 g of water were added using compressed air-assisted spraying with the pressure of 2 bars. After 15 seconds, the turbine speed was increased to 10.4 m/s, with the pan speed maintained at the level of 50 revolutions per minute, and a solution of Ca(H₂PO₄)₂ prepared by dissolving 4.35 g of limestone dust in 12.96 g of orthophosphoric acid (85% by weight) diluted with 70 g of water was added using compressed air-assisted spraying under the pressure of 2 bars. Upon the addition of the second binder component, the grain agglomeration was carried out for 435 seconds at unchanged rotational speeds of the turbine and pan. Further, the turbine speed was reduced to 5 m/s (with the pan speed maintained at the unchanged level of 50 revolutions per minute) and the batch granulation was carried out for another 240 seconds. The final batch temperature was 41.0°C. The resulting granule grain distribution was as follows (in % by weight): 20.42 - fraction below 1 mm, 37.28 - fraction of 1 - 2 mm, 39.67 - fraction of 2 - 4 mm, and 40.54 - fraction of 4 - 8 mm. The Ca/P ratio in the binder was 0.38, sodium aluminate concentration was 2.5% based on the total weight of the dry batch. Water concentration was 9% by weight based on the total weight of the wet batch.

### Example 5: Granulated batch for flint container glass containing 5% of cullet having grain size from 0 to 2 mm

A batch for container glass of the following chemical composition (in % by weight): SiO₂ - 72.34, Al₂O₃ - 1.86, Na₂O - 13.54, K₂O - 0.05, CaO - 11.39, MgO - 0.21, Fe₂O₃ - 0.02, TiO₂ - 0.04, P₂O₅ - 0.25, SO₃ (available) - 0.30 comprised: sand (0.1 - 0.5 mm) - 2444.18 g, feldspar (0.1 - 0.5 mm) - 324.30 g, soda ash (light) - 759.50 g, chalk (< 0.05 mm) - 776.40 g, anhydrite - 19.45 g and 193.52 g of cullet (0-2 mm). All raw materials pre-heated to 50°C were poured into an intensive-mixing mixer with an inclined pan and a star-type mixing turbine. Pre-mixing of the dry batch for 30 seconds was carried out at 25 revolutions of the pan per minute and the turbine speed - 0.5 m/s. Subsequently, without changing the turbine and pan rotation, 90.07 g of water glass having SiO₂/Na₂O module = 3.3 and containing 27.43% by weight of SiO₂ and 8.57% by weight of Na₂O, diluted with 261.09 g of water, were added to the batch by compressed air-assisted spraying with the pressure of 2 bars. After 30 seconds of mixing, the turbine speed was increased to 11.6 m/s and the pan speed to 50 revolutions per minute, and a solution of Ca(H₂PO₄)₂ prepared by dissolving 5.58 g of limestone dust in 15.76 g of orthophosphoric acid (85% by weight) and 115 g of water was added by compressed air-assisted spraying with the pressure of 2 bars. Upon the addition of the second binder component, the grain agglomeration process was carried out for 330 seconds, maintaining previous pan and turbine rotations. Once the grain agglomeration was completed, a granulation was carried out for 150 seconds after reducing the turbine and pan speeds, respectively, to: 2.3 m/s and 10 revolutions per minute. The final granulated batch temperature was 45°C. The total time of mixing, agglomeration and granulation was 10 minutes. The resulting granule size distribution was as follows (in % by weight): fraction below 1 mm - 0.61, fraction of 1 - 2 mm - 10.45, fraction of 2 - 4 mm - 65.49, fraction of 4 - 8 mm - 22.28, fraction of 8 - 12 mm - 1.17, and fraction above 12 mm - 0.18. The amounts of Ca(H₂PO₄)₃ + H₃PO₄ used in the binder corresponded to 0.25% of P₂O₅ in glass of the batch. The Ca/P ratio in the binder was 0.40, the share of water glass - 2.0% based on the weight of the total dry batch. Water share - 9.0% by weight based on the weight of the total wet batch.

### Example 6: Granulated batch for amber container glass containing 10% of cullet having grain size from 0 to 1 mm

A batch for container glass of the following chemical composition (in % by weight): SiO₂ - 71.64, Al₂O₃ - 1.85, Na₂O - 13.64, K₂O - 0.21, CaO - 10.30, MgO - 1.25, Fe₂O₃ - 0.32, TiO₂ - 0.11, P₂O₅ - 0.32, SO₃ (available) - 0.30 comprised: sand (0.1 - 0.5 mm) - 1914.15 g, feldspar (0.1 - 0.5 mm) - 57.88 g, soda ash (light) - 657.92 g, chalk (< 0.05 mm) - 295.71 g, anhydrite - 7.06 g, granulated blast-furnace slag (calumite) 335.35 g, iron oxide rouge - 10.18 g, and 433.61 g of cullet (0-1 mm). All raw materials pre-heated to 60°C were poured into an intensive-mixing mixer with an inclined pan and a star-type mixing turbine. Pre-mixing of the dry batch for 30 seconds was carried out at 25 revolutions of the pan per minute and the turbine speed - 0.5 m/s. Subsequently, without changing the turbine and pan rotation, 81.32 g of water glass having SiO₂/Na₂O module = 3.3 and containing 27.43% by weight of SiO₂ and 8.57% by weight of Na₂O, diluted with 207.41 g of water were added to the batch by compressed air-assisted spraying with the pressure of 2 bars. After 30 seconds of mixing, the turbine speed was increased to 11.0 m/s and the pan speed to 50 revolutions per minute, and a solution of Ca(H₂PO₄)₂ prepared by dissolving 6.37 g of limestone dust in 18.96 g of orthophosphoric acid (85% by weight) and 90 g of water was added by compressed air-assisted spraying with the pressure of 2 bars. Upon the addition of the second binder component, the grain agglomeration process was carried out for 450 seconds, maintaining previous pan and turbine rotations. Once grain agglomeration was completed, a granulation was carried out for 300 seconds after reducing the turbine and pan speeds, respectively, to: 2.75 m/s and 10 revolutions per minute. The total time of mixing, agglomeration and granulation was 14.5 minutes. The final granulated batch temperature was 42°C. The resulting granule size distribution was as follows (in % by weight): fraction below 1 mm - 2.46, fraction of 1 - 2 mm - 29.54, fraction of 2 - 4 mm - 57.74, fraction of 4 - 8 mm - 10.20, fraction of 8 - 12 mm - 0.07. The amounts of Ca(H₂PO₄)₃ + H₃PO₄ used in the binder corresponded to 0.32% of P₂O₅ in glass of the batch. The Ca/P ratio in the binder was 0.38, the share of water glass - 2.2% based on the weight of the total dry batch. Water share - 9.0% by weight based on the weight of the total wet batch.

### Example 7: Granulated batch for green container glass containing 37.5% of cullet having grain size from 1 to 2 mm

A batch for container glass of the following chemical composition (in % by weight): SiO₂ - 72.62, Al₂O₃ - 1.91, Na₂O - 13.16, K₂O - 0.31, CaO - 9.63, MgO - 1.26, Fe₂O₃ - 0.25, Cr₂O₃ - 0,21, TiO₂ - 0.09, P₂O₅ - 0.32, SO₃ (available) - 0.24 comprised: sand (0.1 - 0.5 mm) - 1719.09 g, feldspar (0.1 - 0.5 mm) - 97.69 g, soda ash (light) - 520.24 g, chalk (< 0.05 mm) - 350.39 g, anhydrite - 11.54 g, granulated blast-furnace slag (calumite) - 110.64 g, iron chromite (Portachrom) - 12.51 g, and 1700.44 g of cullet (1-2 mm). All raw materials pre-heated to 60°C were poured into an intensive-mixing mixer with an inclined pan and a star-type mixing turbine. Pre-mixing of the dry batch for 30 seconds was carried out at 25 revolutions of the pan per minute and the turbine speed - 0.5 m/s. Subsequently, without changing the turbine and pan rotation, 99.15 g of water glass having SiO₂/Na₂O module = 3.3 and containing 27.43% by weight of SiO₂ and 8.57% by weight of Na₂O, diluted with 252.01 g of water were added to the batch by compressed air-assisted spraying with the pressure of 2 bars. After 30 seconds of mixing, the turbine speed was increased to 11.0 m/s and the pan speed to 50 revolutions per minute, and a solution of Ca(H₂PO₄)₂ prepared by dissolving 8.00 g of limestone dust in 23.81 g of orthophosphoric acid (85% by weight) and 90 g of water was added by compressed air-assisted spraying with the pressure of 2 bars. Upon the addition of the second binder component, a grain agglomeration process was carried out for 450 seconds, maintaining previous pan and turbine rotations. Once the grain agglomeration was completed, a granulation was carried out for 240 seconds after reducing the turbine and pan speeds, respectively, to: 2.75 m/s and 25 revolutions per minute, and for 240 seconds at the pan speed of 10 revolutions per minute and turbine speed of 2.75 m/s. The total time of mixing, agglomeration and granulation was 17.5 minutes. The final granulated batch temperature was 38°C. The resulting granule size distribution was as follows (in % by weight): fraction below 1 mm - 0.24, fraction of 1 - 2 mm - 3.17, fraction of 2 - 4 mm- 19.36, fraction of 4 - 8 mm - 70.98, fraction of 8 - 12 mm - 6.24, and fraction above 12 mm - 0.42%. The amounts of Ca(H₂PO₄)₃ + H₃PO₄ used in the binder corresponded to 0.32% of P₂O₅ in glass of the batch. The Ca/P ratio in the binder was 0.38, the share of water glass - 2.2% based on the weight of the total dry batch. Water share - 9.0% by weight based on the weight of the total wet batch.

## Claims

1. A method for granulating a glass batch using a silicate-phosphate binder, **characterised in that** the binder is formed in situ in a mixer from a first binder precursor and a second binder precursor during mixing of the glass batch components with both binder precursors, whereby the first binder precursor is water glass containing hydrated sodium silicates or hydrated potassium silicates or a mixture of hydrated sodium and potassium silicates and the second binder precursor is an aqueous solution of Ca(H₂PO₄)₂ or a mixture of Ca(H₂PO₄)₂ and Mg(H₂PO₄)₂. .

2. The method according to claim 1, **characterised in that** the second binder precursor is acidified with phosphoric (V) acid.

3. The method according to claim 2, **characterised in that** the binder is formed by adding separate streams of the first and the second binder precursor to a mixer containing glass batch components, the streams being added simultaneously or sequentially, in any order.

4. The method according to claim 3, **characterised in that** initially a stream of the first binder precursor is added to a mixer containing glass batch components including limestone dust and/or dolomite dust, followed by the addition of phosphoric (V) acid reacting *in situ* with limestone dust and/or dolomite dust to produce the second binder precursor, which contacted with the first binder precursor gives the binder.

5. The method according to claim 3, **characterised in that** initially phosphoric (V) acid is added to a mixer containing glass batch components including limestone dust and/or dolomite dust, said acid reacting *in situ* with limestone dust and/or dolomite dust to produce the second binder precursor, followed by addition of a stream of the first binder precursor to the mixer to give the binder in contact with the second binder precursor.

6. The method according to any of claims 1-5, **characterised in that** the first binder precursor further comprises NaOH and/or KOH, and/or amorphous silica.

7. The method according to claim 6, **characterised in that** the first binder precursor further comprises Na₂CO₃ and/or K₂CO₃.

8. The method according to one of claims 1-7, **characterised in that** the first binder precursor is water glass having a SiO₂/R₂O module of 1.5 to 4.1, preferably from 3.3 to 4.1, wherein R = Na or K.

9. The method according to one of claims 1-3 and 6-8, **characterised in that** the second binder precursor is Ca(H₂PO₄)₂ obtained by dissolving CaCO₃ in form of limestone dust or chalk and/or CaO in form of burnt lime, and/or Ca(OH)₂ in form of slaked lime, in phosphoric acid (V) used in the amount not smaller than the one corresponding to a Ca/P molar ratio of 0.5.

10. The method according to one of claims 1-3 and 6-8, **characterised in that** the second binder precursor is a mixture of Ca(H₂PO₄)₂ and Mg(H₂PO₄)₂ obtained by dissolving CaMg(CO₃)₂ in form of dolomite or mixture of CaCO₃ in form of limestone dust or chalk and/or CaO in form of burnt lime, and/or Ca(OH)₂ in form of slaked lime, and/or MgCO₃, and/or MgO, and/or Mg(OH)₂, in phosphoric acid (V) used in the amount not smaller than the one corresponding to a (Ca+Mg)/P molar ratio of 0.5.

11. The method according to one of claims 1-10, **characterised in that** a component of the batch is fine glass cullet with grain size lower than 2 mm, preferably lower than 1 mm, in the amount of 0.1 to 98% by weight of the total batch weight.

## Patentansprüche

1. Ein Verfahren zum Granulieren eines Glasgemenges unter Verwendung eines Silikat-Phosphat-Bindemittels, **dadurch gekennzeichnet, dass** das Bindemittel in situ in einem Mischer aus einem ersten Bindemittelvorläufer und einem zweiten Bindemittelvorläufer während des Mischens der Glasgemengebestandteile mit beiden Bindemittelvorläufern gebildet wird, wobei der erste Bindemittelvorläufer Wasserglas ist, das hydratisierte Natriumsilikate oder hydratisierte Kaliumsilikate oder eine Mischung aus hydratisierten Natrium- und Kaliumsilikaten enthält, und der zweite Bindemittelvorläufer eine wässrige Lösung von Ca(H₂PO₄)₂ oder eine Mischung aus Ca(H₂PO₄)₂ und Mg(H₂PO₄)₂ ist.

2. Das Verfahren nach Anspruch 1, **dadurch gekennzeichnet, dass** der zweite Bindemittelvorläufer mit Phosphor(V)säure angesäuert wird.

3. Das Verfahren nach Anspruch 2, **dadurch gekennzeichnet, dass** das Bindemittel durch Zugabe getrennter Ströme des ersten und des zweiten Bindemittelvorläufers zu einem Mischer, der Glasgemengekomponenten enthält, gebildet wird, wobei die Ströme gleichzeitig oder nacheinander in beliebiger Reihenfolge zugegeben werden.

4. Das Verfahren nach Anspruch 3, **dadurch gekennzeichnet, dass** zunächst ein Strom des ersten Bindemittelvorläufers in einen Mischer gegeben wird, der Glasgemengebestandteile einschließlich Kalksteinstaub und/oder Dolomitstaub enthält, gefolgt von der Zugabe von Phosphor(V)säure, die in situ mit Kalksteinstaub und/oder Dolomitstaub reagiert, um den zweiten Bindemittelvorläufer zu erzeugen, der in Kontakt mit dem ersten Bindemittelvorläufer das Bindemittel ergibt.

5. Das Verfahren nach Anspruch 3, **dadurch gekennzeichnet, dass** zunächst Phosphor(V)säure in einen Mischer gegeben wird, der Glasgemengebestandteile einschließlich Kalksteinstaub und/oder Dolomitstaub enthält, wobei die Säure in situ mit Kalksteinstaub und/oder Dolomitstaub reagiert, um den zweiten Bindemittelvorläufer zu erzeugen, gefolgt von der Zugabe eines Stroms des ersten Bindemittelvorläufers zum Mischer, um das Bindemittel in Kontakt mit dem zweiten Bindemittelvorläuferzu bringen.

6. Das Verfahren nach einem der Ansprüche 1-5, **dadurch gekennzeichnet, dass** der erste Bindemittelvorläufer außerdem NaOH und/oder KOH und/oder amorphes Siliciumdioxid umfasst.

7. Das Verfahren nach Anspruch 6, **dadurch gekennzeichnet, dass** der erste Bindemittelvorläufer weiterhin Na₂CO₃ und/oder K₂CO₃ umfasst.

8. Das Verfahren nach einem der Ansprüche 1-7, **dadurch gekennzeichnet, dass** der erste Bindemittelvorläufer Wasserglas mit einem SiO₂/R₂O-Modul von 1,5 bis 4,1, vorzugsweise von 3,3 bis 4,1 ist, wobei R = Na oder K.

9. Das Verfahren nach einem der Ansprüche 1-3 und 6-8, **dadurch gekennzeichnet, dass** der zweite Bindemittelvorläufer Ca(H₂PO₄)₂ ist, das durch Auflösen von CaCO₃ in Form von Kalksteinstaub oder Kreide und/oder CaO in Form von gebranntem Kalk gewonnen wird und/oder Ca(OH)₂ in Form von gelöschtem Kalk in Phosphor(V)säure, die in einer Menge verwendet wird, die nicht kleiner ist als diejenige, die einem Ca/P-Molverhältnis von 0,5 entspricht.

10. Das Verfahren nach einem der Ansprüche 1-3 und 6-8, **dadurch gekennzeichnet, dass** der zweite Bindemittelvorläufer ein Gemisch aus Ca(H₂PO₄)₂ und Mg(H₂PO₄)₂ ist, die durch Auflösen von CaMg(CO₃)₂ in Form von Dolomit oder einem Gemisch aus CaCO₃ in Form von Kalksteinstaub oder Kreide und/oder CaO in Form von Branntkalk und/oder Ca(OH)₂ in Form von gebranntem Kalk und/oder MgCO₃ und/oder MgO und/oder Mg(OH)₂ in Phosphor(V)säure, die in einer Menge verwendet wird, die nicht kleiner ist als diejenige, die einem molaren Verhältnis (Ca+Mg)/P von 0,5 entspricht.

11. Das Verfahren nach einem der Ansprüche 1-10, **dadurch gekennzeichnet, dass** ein Bestandteil des Gemenges feine Glasscherben mit einer Korngröße von weniger als 2 mm, vorzugsweise weniger als 1 mm, in einer Menge von 0,1 bis 98 Gew.-% des gesamten Gemengegewichts ist.

## Revendications

1. Une procédé de granulation d'un lot de verre à l'aide d'un liant silicate-phosphate, **caractérisé en ce que** le liant est formé in situ dans un mélangeur à partir d'un premier précurseur de liant et d'un deuxième précurseur de liant lors du mélange des composants du lot de verre avec les deux précurseurs de liant, le premier précurseur de liant étant du verre soluble contenant des silicates de sodium hydratés ou des silicates de potassium hydratés ou un mélange de silicates de sodium et de potassium hydratés et le second précurseur de liant étant une solution aqueuse de Ca(H₂PO₄)₂ ou un mélange de Ca(H₂PO₄)₂ et Mg(H₂PO₄)₂.

2. Le procédé selon la revendication 1, **caractérisé en ce que** le deuxième précurseur de liant est acidifié avec de l'acide phosphorique (V).

3. Le procédé selon la revendication 2, **caractérisé en ce que** le liant est formé en ajoutant des flux séparés du premier et du deuxième précurseur de liant à un mélangeur contenant des composants du lot de verre, les flux étant ajoutés simultanément ou séquentiellement, dans n'importe quel ordre.

4. Le procédé selon la revendication 3, **caractérisé en ce qu'**on ajoute initialement un courant du premier précurseur de liant dans un mélangeur contenant des composants du lot de verre comprenant de la poussière de calcaire et/ou de la poussière de dolomite, suivi par l'ajout d'acide phosphorique (V) réagissant in situ avec de la poussière de calcaire et/ou de la poussière de dolomite pour produire le deuxième précurseur de liant, qui, mis en contact avec le premier précurseur de liant, donne le liant.

5. Le procédé selon la revendication 3, **caractérisé en ce qu'**on ajoute initialement de l'acide phosphorique (V) dans un mélangeur contenant des composants de verre comprenant de la poussière de calcaire et/ou de la poussière de dolomite, ledit acide réagissant in situ avec de la poussière de calcaire et/ou de la poussière de dolomite pour produire le deuxième précurseur de liant, suivi par l'ajout d'un flux du premier précurseur de liant au mélangeur pour mettre le liant en contact avec le deuxième précurseur de liant.

6. Le procédé selon l'une quelconque des revendications 1 à 5, **caractérisé en ce que** le premier précurseur de liant comprend en outre NaOH et/ou KOH, et/ou de la silice amorphe.

7. Le procédé selon la revendication 6, **caractérisé en ce que** le premier précurseur de liant comprend en outre Na₂CO₃ et/ou K₂CO₃.

8. Le procédé selon l'une des revendications 1 à 7, **caractérisé en ce que** le premier précurseur de liant est du verre soluble ayant un module SiO₂/R₂O de 1,5 à 4,1, de préférence de 3,3 à 4,1, dans lequel R = Na ou K.

9. Le procédé selon l'une des revendications 1 à 3 et 6 à 8, **caractérisé en ce que** le deuxième précurseur de liant est du Ca(H₂PO₄)₂ obtenu par dissolution de CaCO₃ sous forme de poussière de calcaire ou de craie et/ou de CaO sous forme de chaux brûlée, et/ou Ca(OH)₂ sous forme de chaux éteinte, dans de l'acide phosphorique (V) utilisé en quantité non inférieure à celle correspondant à un rapport molaire Ca/P de 0,5.

10. Le procédé selon l'une des revendications 1 à 3 et 6 à 8, **caractérisé en ce que** le deuxième précurseur de liant est un mélange de Ca(H₂PO₄)₂ et de Mg(H₂PO₄)₂ obtenu par dissolution de CaMg(CO₃)₂ sous forme de dolomite ou de mélange de CaCO₃ sous forme de poussière de calcaire ou de craie et/ou de CaO sous forme de chaux brûlée, et/ou de Ca(OH)₂ sous forme de chaux éteinte, et/ou de MgCO₃, et/ou de MgO, et/ou de Mg (OH)₂, dans l'acide phosphorique (V) utilisé en quantité non inférieure à celle correspondant à un rapport molaire (Ca+Mg)/P de 0,5.

11. Le procédé selon l'une des revendications 1 à 10, **caractérisé en ce qu'**un composant du lot est du calcin de verre fin d'une granulométrie inférieure à 2 mm, de préférence inférieure à 1 mm, dans une proportion de 0,1 à 98 % en poids du poids total du lot.
